# EUROPÄISCHE PATENTSCHRIFT

(11) **EP 1 042 855 B1**
(45) Veröffentlichungstag und Bekanntmachung des Hinweises auf die Patenterteilung: **17.03.2004**
(21) Anmeldenummer: 98965606.1
(22) Anmeldetag: 04.12.1998
(51) Int. Cl.: H02K 9/19, H02K 11/04, F04D 29/58

(54) **ANTRIEB FÜR EINE PUMPE**
DRIVING MECHANISM FOR A PUMP
ENTRAINEMENT POUR POMPE

(30) Priorität: 23.12.1997 DE 19757728
(43) Veröffentlichungstag der Anmeldung: 11.10.2000
(73) Patentinhaber: Bosch Rexroth AG, 97816 Lohr am Main (DE)
(72) Erfinder: DANTLGRABER, Jörg, D-97816 Lohr (DE)
(74) Vertreter: Polte, Willi, Dr.-Ing. Dipl.-Ing.
(86) Internationale Anmeldenummer: PCT/DE1998/003571
(87) Internationale Veröffentlichungsnummer: WO 1999/034498

(56) Entgegenhaltungen:
- EP-A- 0 661 793
- DE-C- 4 222 394
- GB-A- 2 199 081
- US-A- 5 454 697

## Beschreibung

Die vorliegende Erfindung bezieht sich auf den Antrieb für eine Pumpe, gemäß dem Oberbegriff des Anspruchs 1. Ein solcher Antrieb ist aus EP-A-0 661 793 bekannt.

Aus dem Stand der Technik sind weiterhin Verstellpumpen bekannt, bei denen das Hubvolumen und der Volumenstrom mechanisch veränderbar sind. Flügelzellenpumpen und Kolbenpumpen sind für eine Verstellung auf diesem Wege geeignet. Diese Pumpen fördern nur soviel Fluid wie gebraucht, wobei die Verstellung innerhalb der Pumpe erfolgt. Nachteilig wirkt sich jedoch aus, daß bewegliche Teile mechanisch verstellt werden müssen, was die Genauigkeit negativ beeinflußt, daß für die Volumenstromregelung Meßblenden zum Einsatz gelangen, die den Wirkungsgrad verringern, und daß die Drehzahl stärker begrenzt ist als bei Konstantpumpen.

Zur Lösung dieser Probleme werden im Stand der Technik Drehfeldmaschinen zum Pumpenantrieb verwendet, deren Eingangsspannung und Eingangsfrequenz durch einen Frequenzumrichter änderbar sind. Der Frequenzumrichter kann dabei von der Drehfeldmaschine räumlich getrennt sein oder mit dieser verschraubt sein. Als Frequenzumrichter sind Direktumrichter verwendbar, durch die die Motorwicklung auf unterschiedliche Außenleiterspannungen geschaltet wird. Von Nachteil ist jedoch, daß die Ausgangsfrequenz nur in großen Stufen verstellbar ist und daß nur Frequenzen unterhalb der Netzfrequenz möglich sind.

Diese Nachteile sind bei einem Frequenzumrichter mit Zwischenkreis beseitigt. Bei einem solchen Zwischenkreisumrichter wird die Netzspannung zu einer Gleichspannung gleichgerichtet, geglättet und an eine Wechselrichter angelegt. Am Ausgang des Wechselrichters steht dann ein Wechselstrom mit einer anderen Spannung und einer anderen Frequenz zur Verfügung, der dann in die Drehfeldmaschine gelangt. Bevorzugte Drehfeldmaschinen sind aus wirtschaftlichen Überlegungen heraus die weit verbreiteten Drehstromasynchronmotoren. Ein solcher Motor zeichnet sich dadurch aus, daß eine Vielzahl an Typen zur Verfügung stehen und daß bei diesem keine Anlaufhilfen benötigt werden.

Durch Wirbelströme und Ummagnetisierungen im magnetischen Material und durch die Wirkung des elektrischen Stromes in den Wicklungswiderständen der vorstehend angeführten Drehfeldmaschinen entsteht Wärme, die die nutzbaren Leistung begrenzt. Zum Abführen dieser Wärme gelangt beim Drehstromasynchronmotor typischerweise die Oberflächenkühlung zum Einsatz, durch die zusätzlich Lüfterverluste entstehen.

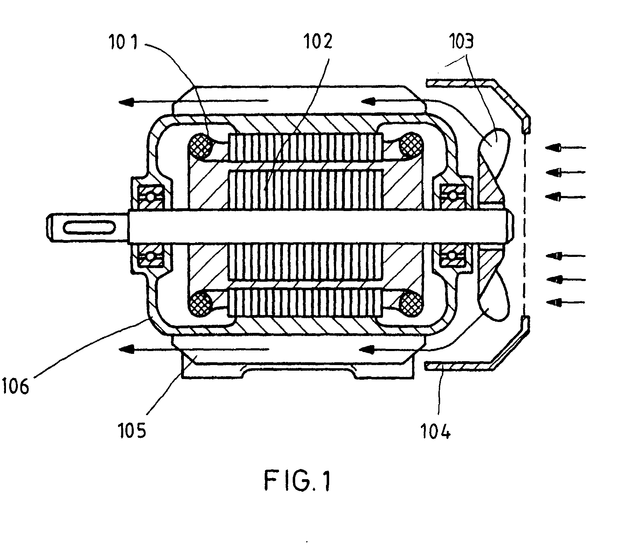

Eine Eigenkühlung, die die Temperatur an der Oberfläche verringert, ist in Fig. 1 gezeigt. Dabei befinden sich in einem Gehäuse 106 ein Läufer 102 und die Statorwicklung 101, an denen Wärme entsteht. Auf dem Gehäuse 106 sind Kühlrippen 105 vorgesehen, die die entstandene Wärme auf einer großen Oberfläche der Luft aussetzen. Ein Lüfter 103 erhöht die Strömungsgeschwindigkeit der angesaugten Luft und leitet diese an Schutzkappen 104 vorbei über die Kühlrippen 105, wo die Luft die entstandene Wärme aufnehmen kann.

Da das verwendete Kühlmedium ein Gas ist und in der Umgebung in ausreichendem Umfang zur Verfügung steht, ist die Oberflächenkühlung ein ökonomisch günstiges Verfahren, wenn die Kühlung drehzahlabhängig erfolgen kann, die abzuführende Wärmemenge einen bestimmten Grenzwert nicht überschreitet und die Luftreinheit und Leuchtfeuchtigkeit bestimmten Mindestanforderungen genügt.

Auch am Frequenzumrichter wird Energie erzeugt, die nicht zur Pumpe übertragbar ist. Generatorische Energie wird bei sehr großen Antrieben ab ungefähr 30kW in das Netz zurückgespeist. Bei Antrieben im mittleren und unteren Leistungsbereich wird ein Bremswiderstand in den Zwischenkreis geschaltet, sobald die Zwischenkreisspannung über einem bestimmten Wert liegt. An diesem Bremswiderstand erfolgt die Umsetzung der Überschußenergie in Wärme, die vom Gehäuse an die Umgebungsluft übertragen wird.

Die Aufgabe der vorliegenden Erfindung besteht darin, die Kühlung eines Antriebs für eine Pumpe mit einem Antriebsmotor zu optimieren und effektiv auszuführen, wobei eine hohe Kompaktheit der Vorrichtung abgesichert werden soll.

Darüber hinaus soll bei der vorliegenden Erfindung der Wirkungsgrad eines Standardasynchronmotors verbessert werden und eine große Wärmemenge vom Standardasychronmotor abgeführt werden.

Es wird ferner angestrebt, die Luftschallemission einer Kombination aus Antriebsmotor und Pumpe zu verringern.

Diese Aufgabe wird durch einen Antrieb für eine Pumpe mit einem Antriebsmotor nach Anspruch 1 erfüllt.

Bevorzugt befindet sich der Kühlkörper am Sauganschluß der Pumpe, damit sich der Druck und der Volumenstrom am Druckanschluß der Pumpe auf den gewünschten Werten befinden.

Wenn auch eine stärkere Kühlung des Antriebsmotors gewünscht oder erforderlich ist, ist es günstig, diesen Antriebsmotor in einer solchen Weise im Kühlkörper anzuordnen, daß eine maximale Umströmung auftritt. Dadurch kann die Wärmeübertragung vom Antriebsmotor zur Druckflüssigkeit, die somit ebenfalls als Kühlflüssigkeit verwendet wird, optimiert werden.

Für den Kühlkörper ist die Rohrform gut geeignet, da auf diese Weise die Anzahl der Totzonen minimiert wird und gleichzeitig eine gleichmäßige Umströmung des Antriebsmotors im Kühlkörper stattfinden kann. Ferner sind dadurch auch Problemstellungen bezüglich der Abdichtung des Kühlkörpers in günstiger Weise lösbar.

Bei Verwendung eines Standardasynchronmotors können der A-Flansch und der B-Flansch an Flanschdeckeln an beiden Seiten des rohrförmigen Hauptabschnitts des Kühlkörpers befestigt werden, so daß der Antrieb entsprechend der vorliegenden Erfindung in einfacher Weise bei schon vorhandenen Antriebsmotoren einsetzbar ist. Bevorzugt werden dabei Dichtungen zwischen den zylindrischen Abschnitt des Motors und die jeweiligen Flansche eingebracht, um das Motorinnere vom Innenraum des Kühlkörpers zu isolieren.

Wenn die elektrische Verbindung zwischen dem Antriebsmotor und dem Frequenzumrichter durch einen Flanschdeckel hindurchgehend erfolgt, wird die Beeinflussung des Kabels zur elektrischen Ansteuerung des Antriebsmotors durch die hydraulische Strömung im Kühlkörper vermieden.

Ein Lüfter kann an einer Lüfterwelle des Antriebsmotors außerhalb des Kühlkörpers vorgesehen sein, um eine Luftbewegung um den Kühlkörper herum zu verursachen. Dadurch wird die Temperatur der Druckflüssigkeit, die der Pumpe zugeführt wird, verringert.

Der Anschluß zum Tank und der Anschluß zur Pumpe befinden sich vorzugsweise außerhalb der mechanischen Verbindung zwischen den Flanschen und den Flanschdeckeln. Durch eine solche Anordnung wird der mechanisch stabile Einbau des Antriebsmotors in den Kühlkörper ermöglicht und wird ebenfalls eine schnelle Druckflüssigkeitsbewegung durch den Kühlkörper hindurch gestattet.

Zur Vermeidung geradliniger, bevorzugter Strömungspfade im Kühlkörper sind die Anschlüsse in einem weiteren Ausführungsbeispiel der vorliegenden Erfindung bezüglich der Abtriebswelle des Antriebsmotors versetzt, d.h. sind an unterschiedlichen Relativpositionen auf den Flanschdeckeln ausgebildet. Eine gleichmäßige Durchströmung aller Bereich des Kühlkörpers wird dadurch erzielt.

Eine hohe Kompaktheit des Antriebs entsprechend der vorliegenden Erfindung wird in der vorliegenden Erfindung dadurch sichergestellt werden, daß der stirnseitige Deckel des Antriebsmotor gleichzeitig als Abschlußdeckel der Pumpe verwendet wird.

Vorzugsweise verläuft in dem stirnseitigen Deckel eine Fluidleitung, die den Raums in der Umgebung des Antriebsmotors und mit dem Sauganschluß der Pumpe verbindet. Dadurch werden die Leitungsführung außerhalb des Antriebs vermieden und die Betriebssicherheit erhöht.

In einer bevorzugten Ausführungsform ist der Raum in der Umgebung des Antriebsmotors der Innenraum im Kühlkörper, wodurch eine raumsparende Anordnung von Pumpe, Antriebsmotor und Frequenzumrichter bei gleichzeitig effektiver Kühlung von Motor und Frequenzumrichter ermöglicht werden.

Von Vorteil ist es ferner, daß die Pumpe eine Axialkolbenpumpe ist und eine Stützvorrichtung am stirnseitigen Deckel für ein Widerlager der Axialkolben vorgesehen ist. Durch diese Stützvorrichtung bedingt können die Schwingungen der Pumpe minimiert werden, da eine allein an den mechanischen Eigenschaften ausgerichtete Gestaltung der Stützvorrichtung erfolgen kann.

Radial außerhalb der Stützvorrichtung kann sich ein am stirnseitigen Deckel befestigtes Gehäuse aus schalldämmendem Material befinden. Da dieses Gehäuse nur an einem Endabschnitt mit der Stützvorrichtung, vorzugsweise körperschallisoliert, mechanisch verbunden ist, ist die Schallemission der Pumpe geringer.

In einer weiteren bevorzugten Ausführungsform sind die entgegengesetzten Endabschnitte des Antriebsmotor über Flanschdeckel aus flexiblem Material am Kühlkörper befestigt. Eine solche Struktur trägt zur weiteren Geräuschdämpfung des Antriebs bei.

Erfindungsgemäße Weiterbildungen sind Gegenstand der Unteransprüche.

Im folgenden wird die Erfindung unter Bezugnahme auf die beiliegenden Zeichnungen detailliert beschrieben.

Fig. 1 stellt einen Querschnitt eines herkömmlichen Drehstromasynchronmotors mit Oberflächenkühlung dar.

Fig. 2 ist eine Prinzipdarstellung eines erfindungsgemäßen Antriebs und einer angetriebenen Pumpe bei Einbindung in einen Hydraulikkreislauf.

Fig. 3 zeigt den Querschnitt durch den Antrieb für eine Pumpe entsprechend der vorliegenden Erfindung.

In Fig. 4 ist die Seitenansicht von links des erfindungsgemäßen Antriebs aus Fig. 3 gezeigt.

Fig. 5 stellt ein zweites Ausführungsbeispiel des erfindungsgemäßen Antriebs dar.

Fig. 6 zeigt ein drittes Ausführungsbeispiel des erfindungsgemäßen Antriebs.

Fig. 7 zeigt ein viertes Ausführungsbeispiel des erfindungsgemäßen Antriebs.

Fig. 8 zeigt ein fünftes Ausführungsbeispiel der vorliegenden Erfindung.

Fig. 9 zeigt ein sechstes Ausführungsbeispiel der vorliegenden Erfindung.

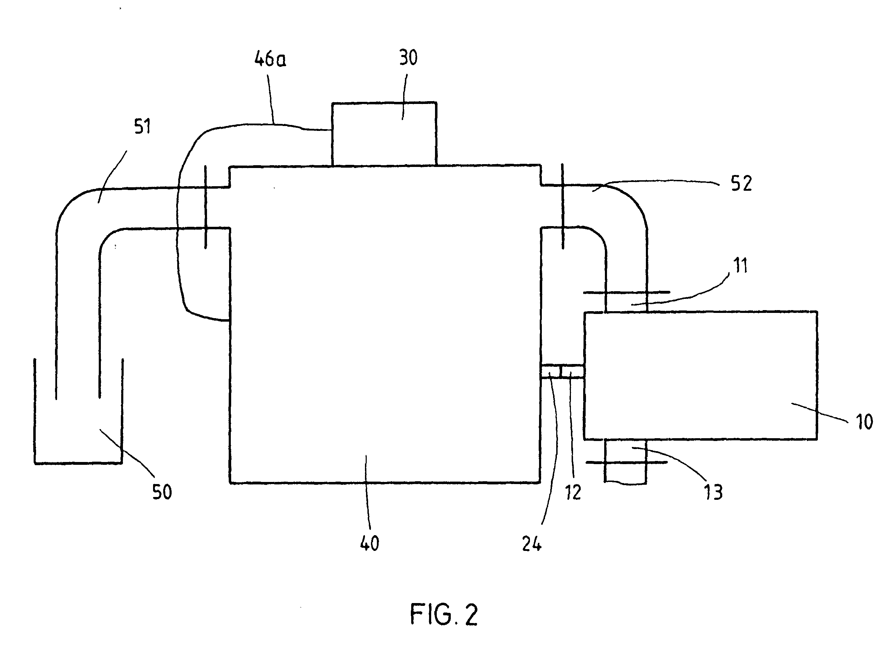

Zu Beginn wird der relevante Abschnitt eines hydraulischen Systems mit einem Antrieb entsprechend der vorliegenden Erfindung unter Bezugnahme auf Fig. 2 erläutert.

In einem Kühlkörper 40 ist ein Antriebsmotor 20 vorgesehen, dessen Abtriebswelle 24 mit der Antriebswelle 12 einer hydraulischen Pumpe 10 verbunden ist. Ferner befindet sich am Kühlkörper 40 ein Frequenzumrichter 30, der eine gewünschte Spannung und Frequenz am Antriebsmotor 20 über ein Kabel 46a vorsieht. Somit können die Drehzahl der Pumpe und in Folge davon auch das Drehmoment von dieser durch eine geeignete Ansteuerung des Frequenzumrichters 30 verstellt werden.

Der Kühlkörper 40 ist über einen ersten Leitungsabschnitt 51 mit einem Tank 50 verbunden, durch den ein Druckmedium, das Öl, Wasser oder ein anderes von der Pumpe zu förderndes Fluid sein kann, eingespeist wird. Der Tank 50 kann durch ein beliebiges hydraulisches System ersetzt sein, durch das Druckflüssigkeit zur Verfügung gestellt wird.

Die Druckflüssigkeit gelangt aus dem Kühlkörper 40 über einen zweiten Leitungsabschnitt 52 zum Sauganschluß 11 der Pumpe 11, durch die die gewünschte Änderung des Volumenstromes und des Drucks von der Druckflüssigkeit vorgenommen wird.

Alternativ dazu ist es jedoch auch möglich, den Tank 50 direkt mit dem Sauganschluß 11 der Pumpe 10 zu verbinden und den Kühlkörper 40 erst hinter einem Druckanschluß 13 der Pumpe 10 vorzusehen. In diesem Fall muß der Kühlkörper 40 druckfest ausgeführt werden.

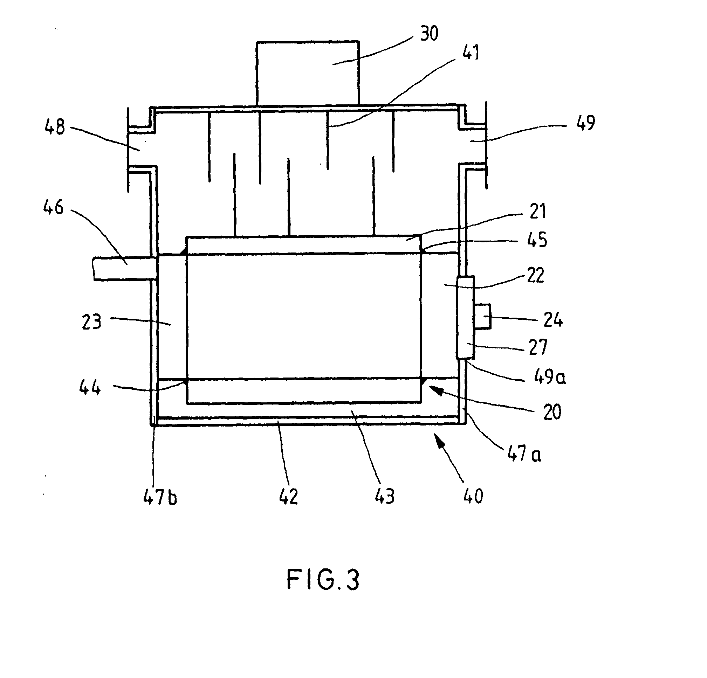

Nachfolgend wird die Baugruppe aus Kühlkörper 40, Antriebsmotor 20 und Frequenzumrichter 30 unter Bezugnahme auf Fig. 3 näher beschrieben.

Der Antriebsmotor 20, der sich im Kühlkörper 40 befindet und vorzugsweise ein Standardasynchronmotor ist, weist einen mittleren zylindrischen Abschnitt 21 auf, an dem Kühlrippen vorgesehen sind. An den beiden Stirnseiten dieses zylindrischen Abschnitts 21 sind ein A-Flansch 22 bzw. ein B-Flansch 23 vorgesehen, die die Stirnseiten schließen. Der zylindrische Abschnitt 21, der A-Flansch 22 und der B-Flansch 23 sind aus dem Stand der Technik bekannt. Dadurch wird ermöglicht, daß herkömmliche Standardasynchronmotoren bei der vorliegenden Erfindung verwendbar sind, wobei der Lüfter, der in Fig. 1 mit dem Bezugszeichen 103 bezeichnet ist, in Fig. 3 abzumontieren ist.

Um den Eintritt von Druckflüssigkeit in den Raum zwischen Läufer und Statorwicklung im Antriebsmotor 20 zu verhindern, sind an den Fügestellen zwischen dem zylindrischen Abschnitt 21 und den A-Flansch 22 bzw. B-Flansch 23 umlaufende Dichtungen 44, 45 ausgebildet.

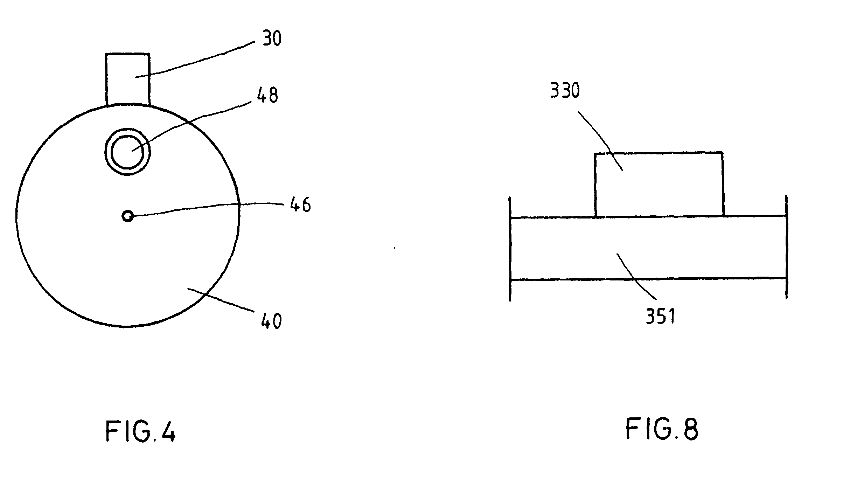

Der Kühlkörper 40 weist im ersten Ausführungsbeispiel, wie dieses in Fig. 3 gezeigt ist, einen rohrförmigen Abschnitt 42 auf, wobei das Rohr im Querschnitt Kreisform hat, wie es in Fig. 4 gezeigt ist, oder eine beliebige andere eckige, ovale oder ellipsenartige Form haben kann. Es ist jedoch sicherzustellen, daß der Innendurchmesser des rohrförmigen Abschnitts 42 größer als der Außendurchmesser des zylindrischen Abschnitts 21 vom Antriebsmotor 20 einschließlich den dort angebracht Kühlrippen ist, damit die Druckflüssigkeit den gesamten Außenumfang des Antriebsmotors 20 kühlen kann.

An den axialen Endabschnitten des rohrförmigen Abschnitts 42 befinden sich, wie es in Fig. 3 gezeigt ist, Flanschdeckel 47a, 47b, die gegenüber dem rohrförmigen Abschnitt 42 und dem A- und B-Flansch (22, 23) abgedichtet sind. Am Flanschdeckel 47b ist ein Einlaßanschluß 48 angeordnet, durch den die Druckflüssigkeit in einen Innenraum 43 des Kühlkörpers 40 gelangt, der durch den rohrförmigen Abschnitt 42 und die Flanschdeckel 47a, 47b gebildet wird. Ferner ist ein Kabelanschluß 46 im Flanschdeckel 47b vorgesehen, durch den die elektrische Verbindung zwischen dem Antriebsmotor 20 und einem Verbindungskabel 46a zum Frequenzumrichter 30 erfolgt. Ein Auslaßanschluß 49, der die Druckflüssigkeit aus dem Innenraum 43 des Kühlkörpers 40 leitet, ist am Flanschdeckel 47a angeordnet. Darüber hinaus befindet sich eine kreisförmige Öffnung 49a im Flanschdeckel 47a, deren Funktion nachstehend beschrieben wird.

Wenn der Antriebsmotor 20 in den Kühlkörper 40 eingebaut werden soll, wird zuerst der B-Flansch 23 des Antriebsmotors 20 am Flanschdeckel 47b in einer solchen Weise befestigt, daß ermöglicht wird, die elektrische Verbindung zum Frequenzumrichter 30 über den Kabelanschluß 46a herzustellen. Nun wird der rohrförmige Abschnitt 42 am Flanschdeckel 47a fluiddicht befestigt. Im Anschluß wird ein zylindrischer Vorsprung 27 am A-Flansch 22 des Antriebsmotors 20 in die kreisförmige Öffnung 49a im Flanschdeckel 47a eingebracht und gegenüber dieser abgedichtet, wobei gleichzeitig der Flanschdeckel 47b auf den rohrförmigen Abschnitt 42 aufgesetzt und gegenüber diesem abgedichtet wird. Als Ergebnis steht die Antriebswelle 24 des Antriebsmotors 20 an der Seite des Flanschdeckels 47a aus dem Kühlkörper 40 hervor und kann mit der Pumpenantriebswelle 12 entsprechend Fig. 2 verbunden werden. Alternativ dazu können jedoch auch der Kühlkörper 40 und die Pumpe 10 in einem größeren Abstand als in Fig. 2 gezeigt angeordnet werden.

Der Frequenzumrichter 30 befindet sich am Umfang des rohrförmigen Abschnitts 42 des Kühlkörpers 40 und berührt die Außenumfangsfläche am Abschnitt 42 mit einer möglichst großen Fläche.

Somit wird der Frequenzumrichter 30 durch einen Flüssigkeitsstrom vom Einlaßanschluß 48 zum Auslaßanschluß 49 gekühlt. Gleichzeitig erfolgt auch eine Kühlung der gesamten Außenumfangsfläche des Antriebsmotors 20 mit diesem Flüssigkeitsstrom.

Um einen gleichmäßigen Wärmeaustausch im gesamten Innenraum 43 des Kühlkörpers 40 vorzusehen, können im bevorzugten Ausführungsbeispiel der Erfindung zwischen der Innenumfangswand am rohrförmigen Abschnitt 42 und der Außenumfangswand des zylindrischen Abschnitts 21 des Antriebsmotors 20 einschließlich den Kühlrippen Einbauten 41 vorgesehen sein, wie es in Fig. 3 dem Prinzip nach gezeigt ist.

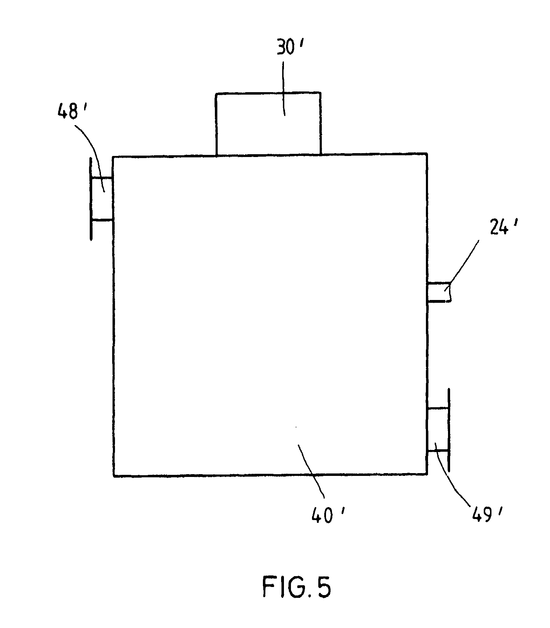

Im zweiten Ausführungsbeispiel der vorliegenden Erfindung, das in Fig. 5 gezeigt ist, sind der Einlaßanschluß 48' und der Auslaßanschluß 49' zueinander in Radialrichtung des rohrförmigen Abschnitts 42 versetzt. Dadurch können sowohl eine gleichmäßige Umströmung des Antriebsmotors 20 als auch ein ausreichender Wärmeaustausch der Druckflüssigkeit mit dem Frequenzumrichter 30 ohne Einbauten im Innenraum 43 vorgesehen werden.

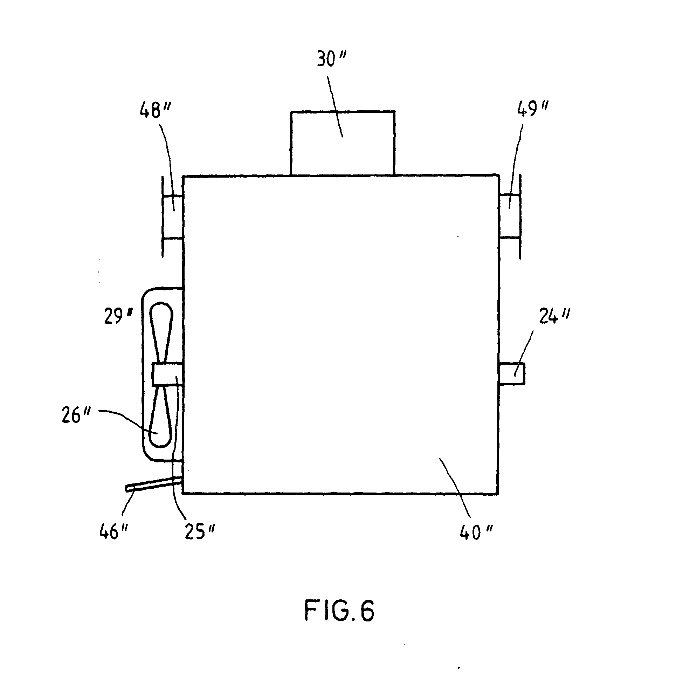

Entsprechend dem in Fig. 6 gezeigten dritten Ausführungsbeispiel der vorliegenden Erfindung kann durch den Flanschdeckel, an dem der Einlaßanschluß 48" vorgesehen ist, eine Lüfterwelle 25" des Antriebsmotors verlaufen, an der ein Lüfter 26" befestigt ist. Dieser Lüfter 26" bewirkt eine drehzahlabhängige Luftzirkulation um den Kühlkörper herum, wodurch die Außenwand des Kühlkörpers 40 gekühlt wird. Als Ergebnis ist die Temperatur der Druckflüssigkeit, die in die Pumpe 10 gelangt, niedriger. Der Lüfter 26" ist vorzugsweise mit einer luftdurchlässigen Schutzkappe 29" verkleidet, um die Verletzungsgefahr bei rotierendem Lüfter 26" zu beseitigen. Das Kabel 46" muß in diesem Fall radial außerhalb des Lüfters 26" angeordnet werden.

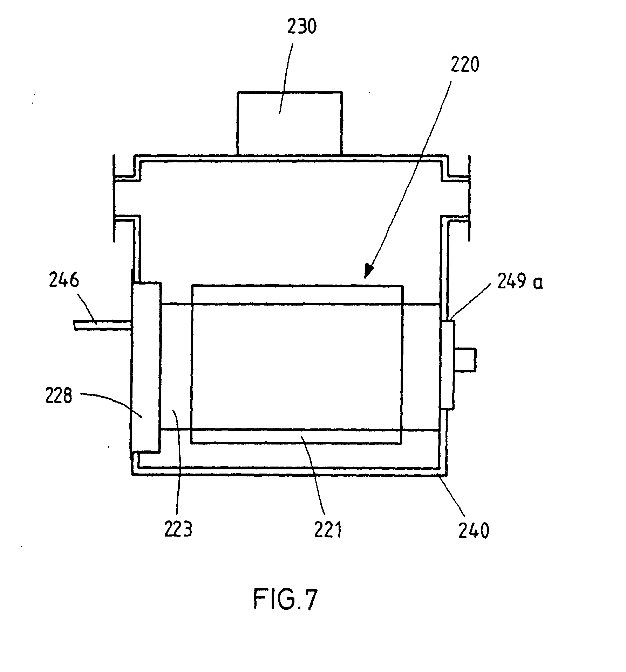

In Fig. 7 ist ein viertes Ausführungsbeispiel der vorliegenden Erfindung gezeigt, bei dem der konstruktive Aufbau des Kühlkörpers verändert ist. Die Flanschdeckel aus dem ersten Ausführungsbeispiel sind hier in den Kühlkörper 240 integriert. Um die Montage des Antriebsmotors 220, der auch hier ein Standardasynchronmotor sein kann, zu ermöglichen, wird am B-Flansch 223 des Antriebsmotors 220 ein Einbringflansch 228 befestigt, der einen größeren Außendurchmesser als der zylindrische Abschnitt 221 des Antriebsmotors 220 hat. In diesem Einbringflansch 228 ist der entsprechende Anschluß für das Kabel 246 zum Frequenzumformer 230 vorgesehen. Folglich müssen bei der Montage nur der Antriebsmotor 220 in die kreisförmige Öffnung 49a eingebracht und der Einbringflansch 228 am B-Flansch 223 angebracht werden. Als Ergebnis ist die Anzahl der abzudichtenden Fügestellen am Kühlkörper 240 verringert.

Den Ausführungsbeispielen, die in den Fig. 2 bis 7 gezeigt sind, ist gemeinsam, daß die zu pumpende Druckflüssigkeit sowohl den Frequenzumrichter als auch den Antriebsmotor kühlt. Es erfolgt also eine Fremdkühlung, die gegenüber der Eigenkühlung bei herkömmlichen Asynchronmaschinen sowohl bezüglich der Kühlwirkung als auch der Effektivität, da die Druckflüssigkeit ohnehin durch die Pumpe unter Druck gesetzt werden soll, von Vorteil ist. Eine weitere Steigerung der Effektivität ist durch die zusätzliche Lüfterkühlung entsprechend dem in Fig. 6 gezeigten dritten Ausführungsbeispiel möglich.

Ferner ist bei den Ausführungsbeispielen der Fig. 2 bis 7 ebenfalls von Vorteil, daß Axialkräfte, die von der Pumpe zum Antriebsmotor übertragen werden, durch die Druckflüssigkeit in der Umgebung des Antriebsmotors gedämpft werden. Dabei kann eine Dämpfung der Luftschallemission um zusätzliche 6dB erfolgen.

Darüber hinaus ist die Kühlung bei den Antrieben für eine Pumpe entsprechend den Fig. 2 bis 5 und Fig. 7 unabhängig von der Umgebungsluft. Somit ist auch eine effiziente Kühlung für den Fall möglich, bei dem die Luft stark verunreinigt oder feucht ist und der Antriebsmotor mit Lüfter angegriffen werden würde.

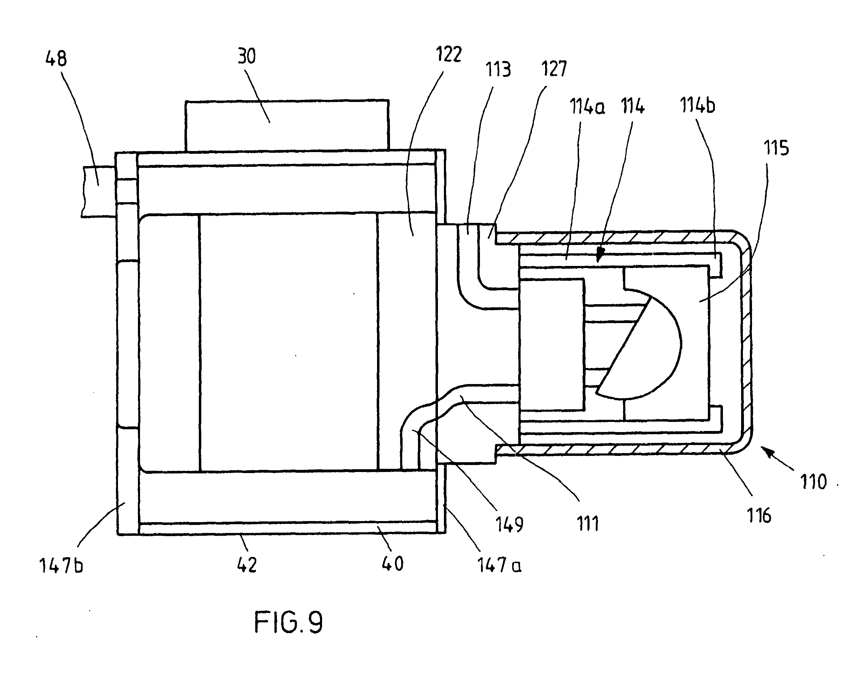

Die einfachste Nutzung des Erfindungsgedankens der vorliegenden Erfindung ist jedoch in Fig. 8 gezeigt, die das fünfte Ausführungsbeispiel darstellt. Beim fünften Ausführungsbeispiel befindet sich ein Frequenzumformer 330 auf einem Leitungsabschnitt 351, der eine hydraulische Quelle mit einer Pumpe verbindet. Die im Frequenzumformer erzeugte Wärmemenge wird dabei an die im Leitungsabschnitt 351 strömende Flüssigkeit abgegeben. Die Kühlung des Antriebsmotors kann in diesem Ausführungsbeispiel in herkömmlicher Weise über die Oberflächenkühlung mit einem Lüfter erfolgen.

In Fig. 9 ist als sechstes Ausführungsbeispiel der vorliegenden Erfindung eine Weiterbildung des zweiten Ausführungsbeispiels gezeigt. Das sechste Ausführungsbeispiel unterscheidet sich vom zweiten Ausführungsbeispiel darin, daß ein A-Flansch 122 als stirnseitiger Deckel des Antriebsmotors vorgesehen ist, der zugleich den Abschlußdeckel einer Pumpe 110 bildet.

Bei einer solchen Struktur ist die Pumpe 110 vorzugsweise eine Axialkolbenpumpe. Genauer gesagt weist der A-Flansch 122 einen zylindrischen Vorsprung 127 auf, an dem Bauteile der Pumpe 110 befestigt sind. Diese Bauteile sind beispielsweise eine Stützvorrichtung 114 für ein verstellbares oder nicht verstellbares axiales Widerlager 115 der Axialkolben und ein Gehäuse 116. Die Stützvorrichtung 114 weist zu den Axialkolben parallele, längliche Abschnitt 114a und zum zylindrischen Vorsprung 127 entgegengesetzt liegende abgewinkelte Abschnitte 114b auf, mit denen sich das Widerlager 115 der Axialkolben in Anlage befindet.

Das Gehäuse 116 ist vorzugsweise becherförmig ausgebildet und umschließt in der auf den zylindrischen Vorsprung 127 aufgebrachten Position die Stützvorrichtung 114 ohne diese zu berühren. Somit können durch das Gehäuse 116 Lecköl aufgefangen und Geräusche gedämpft werden. Zur Verbesserung der Körperschall- und Schwingungsisolierung wird das Gehäuse aus Mineralguß (Reaktionsharzbeton) gefertigt, das auch aufgrund seiner vorzüglichen Formgebungseigenschaften und seines geringen Gewichts verstärkt im Stand der Technik Anwendung findet.

Zwischen den zylindrischen Vorsprung 127 und das Gehäuse 116 wird vorzugsweise körperschallisolierendes Material (nicht dargestellt) eingebaut.

Die doppelte Funktion des A-Flansches 122 bezüglich dem Anbau von hydraulischen und elektrischen Komponenten ist jedoch nicht der einzige Vorteil des A-Flansches. Über den A-Flansch 122 kann auch die hydraulische Verbindung zwischen dem Innenraum des rohrförmigen Abschnitts 42 und den Axialkolben erfolgen. Dazu befindet sich im A-Flansch 122 in radialer Richtung der Auslaßanschluß 149, der über eine Fluidleitung im A-Flansch mit dem Sauganschluß 111 der Pumpe 110 in Verbindung steht. Im Gegensatz dazu ist beim zweiten Ausführungsbeispiel von Fig. 5 der Auslaßanschluß 49" axial herausgeführt ist.

Der Druckanschluß 113 der Pumpe 110 ist radial aus dem zylindrischen Vorsprung 127 geführt, so daß das Druckfluid über geringe Leitungslängen und folglich mit geringeren Energieverlusten zur Verfügung stellbar ist.

Beim sechsten Ausführungsbeispiel kann der Auslaßanschluß 149 bezüglich dem Einlaßanschluß 48 im Verhältnis zur Abtriebswelle des Antriebsmotors versetzt sein, wie es in Fig. 9 gezeigt ist, oder in Abhängigkeit von der gewünschten Fluidführung im Kühlkörper 40 an einer beliebigen anderen Stelle am Umfang des A-Flansches 122 angeordnet sein. Die Position des Druckanschlusses 113 am Außenumfang des zylindrischen Vorsprungs 127 richtet sich nach dem gewünschten Entnahmeort für das Druckfluid.

Mit dem sechsten Ausführungsbeispiel wird daher ein Antrieb für eine Pumpe zur Verfügung gestellt, bei dem die Fluidleitungen verkürzt sind und die Saugleitung zum Sauganschluß der Pumpe von außen nicht sichtbar sind. Dadurch erhöht sich der Kompaktheit der Gesamtvorrichtung.

Zusammenfassend kann ausgesagt werden, daß das Prinzip des sechsten Ausführungsbeispiels, insbesondere die Ausbildung eines stirnseitigen Deckels für den Antriebsmotor als Abschlußdeckel der Pumpe, mit den besonderen Merkmalen der vorhergehenden Ausführungsbeispiele kombinierbar ist.

Beim ersten bis dritten sowie fünften und sechsten Ausführungsbeispiel können Körperschall und Schwingungen des Antriebsmotors stärker isoliert werden, wenn die Flanschdeckel aus einem schalldämmenden Material, wie z.B. Gummi oder Kunststoff, gefertigt werden. Als Kunststoff gelangt dabei bevorzugt Pulyurethan zum Einsatz.

Die Vorteile des schalldämmenden Material werden beim sechsten Ausführungsbeispiel besonders deutlich, da durch die einstückige Ausführung von Antriebsmotor und Pumpe 110 die Amplitude der vom Antriebsmotor erzeugten Schwingungen erhöht wird. Flanschdeckel 147a, 147b aus schalldämmendem Material ermöglichen somit, daß trotz kompakter Bauweise ein geräuscharmer Betrieb möglich ist.

Mit der vorliegenden Erfindung entsprechend den Fig. 1 bis 9 kann jedoch noch ein weiterer Vorteil erzielt werden, wenn in den Innenraum, der in Fig. 3 das Bezugszeichen 43 hat und in Fig. 8 als Leitungsabschnitt 351 bezeichnet ist, von Kühlwasser durchflossene Kühlrohre vorgesehen werden. Dieser Vorteil besteht darin, daß bei einer Vorrichtung, die den Gegenstand der vorliegenden Erfindung aufweist, wie z.B. bei einer Kunststoffgießmaschine, kein separater Ölkühler vorgesehen werden muß.

Die vorliegende Erfindung bezieht sich somit auf einen Antrieb einer Pumpe, der mittels eine Antriebsmotors erfolgt, dessen Drehzahl und Drehmoment durch einen Frequenzumrichter beeinflußt wird. Der Frequenzumrichter ist auf einem Kühlkörper angeordnet, der von der Druckflüssigkeit, die zur Pumpe geführt wird, durchströmt wird. Der Antriebsmotor ist in diesem Kühlkörper angeordnet. Somit kann eine intensive Fremdkühlung eine Pumpe-Antriebsmotor-Systems ohne die Notwendigkeit einer zusätzlichen Kühlflüssigkeit vorgenommen werden. Vorzugsweise ist der Antriebsmotor zentral in einem rohrförmigen Kühlkörper angeordnet und wird über seinem gesamten Umfang der Druckflüssigkeit ausgesetzt. Einbauten oder versetzte Anschlußstutzen gestatten eine gleichmäßige Durchströmung des gesamten Kühlkörpers.

## Patentansprüche

1. Antrieb für eine Pumpe (10), mit einem Antriebsmotor (20), der zur Drehzahländerung und Drehmomentbeeinflussung über einen Frequenzumrichter (30) angesteuert ist, wobei der Frequenzumrichter (30) auf einem Kühlkörper (40) mit einem von Kühlflüssigkeit durchströmten Innenraum (43) befestigt ist, der in den Fluidkreislauf der Pumpe (10) eingebunden ist, **dadurch gekennzeichnet, daß** der Antriebsmotor (20) im Innenraum (43) und die Pumpe (10) außerhalb des Kühlkörpers (40) gelagert ist.

2. Antrieb nach Anspruch 1, wobei der Kühlkörper (40) in der Saugleitung (51, 52) von einem Tank (50) zur Pumpe (10) angeordnet ist.

3. Antrieb nach Anspruch 1 oder 2, wobei der Antriebsmotor (20) von der Kühlflüssigkeit umströmt wird.

4. Antrieb nach Anspruch 3, wobei der Kühlkörper (40) ein rohrförmiges Gehäuse hat, auf dessen Mantel der Frequenzumrichter (30) befestigt ist und in dem der Antriebsmotor (20) koaxial angeordnet ist.

5. Antrieb nach Anspruch 4, wobei der Kühlkörper (40) stirnseitig durch Flanschdeckel (47a, 47b) verschlossen ist, die einen A-Flansch (22) bzw. einen B-Flansch (23) des Antriebsmotors (20) tragen, wobei die Abtriebswelle (24) des Antriebsmotors (20) einen der Flanschdeckel (47a) durchsetzt.

6. Antrieb nach Anspruch 5, wobei zwischen den Flanschen (22, 23) und einem zylindrischen Abschnitt (21) des Motors (20) umlaufende Dichtungen (44, 45) angeordnet sind, die den Eintritt der Kühlflüssigkeit in den Innenraum des Antriebsmotors (20) verhindern.

7. Antrieb nach Anspruch 6, wobei der Kabelanschluß (46) für den Antriebsmotor (20) durch einen der Flanschdeckel (47b) geführt ist.

8. Antrieb nach Anspruch 7, wobei durch den Flanschdeckel (47b), durch den der Kabelanschluß (46) geführt ist, eine Lüfterwelle (25) verläuft, die mit der Abtriebswelle (24) des Antriebsmotors (20) einstückig ausgebildet ist und mit einem Lüfter (26) versehen ist.

9. Antrieb nach den Ansprüchen 5 bis 8, wobei die Anschlüsse (48, 49) zum Tank (50) und zum Sauganschluß (11) der Pumpe (10) in den beiden Flanschdeckeln (47a, 47b) außerhalb der mechanischen Verbindung zwischen Flanschdeckel (47a, 47b) und dem jeweiligen Flansch (22, 23) ausgebildet sind.

10. Antrieb nach Anspruch 9, wobei die Anschlüsse (48, 49) bezüglich der Abtriebswelle (24) des Antriebsmotors (20) versetzt angeordnet sind.

11. Antrieb nach Anspruch 1, wobei ein stirnseitiger Deckel (122) des Antriebsmotors (20) zugleich auch Abschlußdeckel der Pumpe (10) ist.

12. Antrieb nach Anspruch 11, wobei ein von Kühlflüssigkeit durchströmter Raum in der Umgebung des Antriebsmotors (20) mit einem Sauganschluß (111) der Pumpe (10) über eine im stirnseitigen Deckel (122) verlaufende Fluidleitung verbunden ist.

13. Antrieb nach Anspruch 11, wobei der von Kühlflüssigkeit durchströmte Raum in der Umgebung des Antriebsmotors (20) der Innenraum (43) im Kühlkörper (40) ist.

14. Antrieb nach einem der Ansprüche 11 bis 13, wobei die Pumpe (10) eine Axialkolbenpumpe ist und ein axiales Widerlager (115) der Axialkolben durch eine am stirnseitigen Deckel (122) vorgesehene Stützvorrichtung (114) gehalten wird.

15. Antrieb nach Anspruch 14, wobei radial außerhalb der Stützvorrichtung (114) ein am stirnseitigen Deckel (122) befestigtes Gehäuse (116) aus schalldämmendem Material vorgesehen ist.

16. Antrieb nach einem der Ansprüche 11 bis 15, wobei der stirnseitige Deckel (122) und der entgegengesetzt liegenden Endabschnitt des Motors durch Flanschdeckel (147a, 147b) am Kühlkörper (40) befestigt sind.

17. Antrieb nach einem der Ansprüche 5 bis 15, wobei die Flanschdeckel (47a, 47b; 147a, 147b) aus flexiblem Material gefertigt sind.

18. Antrieb nach einem der vorhergehenden Ansprüche, wobei der Antriebsmotors (20) ein Standard-Asynchronmotor ist.

## Claims

1. A drive mechanism for a pump (10), including a drive motor (20) actuated through a frequency converter (30) for varying rotational speed and influencing torque, wherein said frequency converter (30) is fastened on a heat dissipator (40) including a cavity (43) confining a flow of cooling liquid, said cavity being incorporated in the fluid circuit of said pump (10), **characterised in that** said drive motor (20) is mounted inside said cavity (43), and said pump (10) is mounted outside of said heat dissipator (40).

2. The drive mechanism in accordance with claim 1, wherein said heat dissipator (40) is arranged in the suction conduit (51, 52) from a tank (50) to said pump (10).

3. The drive mechanism in accordance with claim 1 or 2, wherein said drive motor (20) is enveloped by a flow of said cooling liquid.

4. The drive mechanism in accordance with claim 3, wherein said heat dissipator (40) has a tubular housing, on the jacket of which said frequency converter (30) is secured, and wherein said drive motor (20) is arranged coaxially.

5. The drive mechanism in accordance with claim 4, wherein said heat dissipator (40) is closed on the front face side by flange lids (47a, 47b) respectively carrying an A flange (22) and a B flange (23) of said drive motor (20), the output shaft (24) of said drive motor (20) extending through one of said flange lids (47a).

6. The drive mechanism in accordance with claim 5, wherein between said flanges (22, 23) and a cyclindrical portion (21) of said motor (20) peripheral seals (44, 45) preventing entrance of said cooling liquid into the cavity of said drive motor (20) are provided.

7. The drive mechanism in accordance with claim 6, wherein the cable connector (46) for said drive motor (20) is routed through one of said flange lids (47b).

8. The drive mechanism in accordance with claim 7, wherein a fan shaft (25), integrally formed with said output shaft (24) of said drive motor (20) and provided with a fan (26), extends through said flange lid (47b) through which said cable connector (46) is routed.

9. The drive mechanism in accordance with claims 5 to 8, wherein the ports (48, 49) towards said tank (50) and towards the suction port (11) of said pump (10) are formed in the said two flange lids (47a, 47b) externally of the mechanical connection between flange lid (47a, 47b) and respective flange (22, 23).

10. The drive mechanism in accordance with claim 9, wherein said ports (48, 49) have a staggered arrangement with respect to said output shaft (24) of said drive motor (20).

11. The drive mechanism in accordance with claim 1, wherein a front face-side lid (122) of said drive motor (20) at the same time constitutes a sealing cover of said pump (10).

12. The drive mechanism in accordance with claim 11, wherein a cavity confining a flow of cooling liquid in the vicinity of said drive motor (20) is connected to a suction port (111) of said pump (10) by means of a fluid conduit extending in said front face-side lid (122).

13. The drive mechanism in accordance with claim 11, wherein the cavity confining a flow of cooling liquid in the vicinity of said drive motor (20) is said cavity (43) inside said heat dissipator (40).

14. The drive mechanism in accordance with any one of claims 11 to 13, wherein said pump (10) is an axial piston pump, and an axial abutment (115) of the axial pistons is retained by support means (114) provided at said front face-side lid (122).

15. The drive mechanism in accordance with claim 14, wherein radially outside from said support means (114) a housing (116) comprised of sound-insulating material and fastened on said front face-side lid (122) is provided.

16. The drive mechanism in accordance with any one of claims 11 to 15, wherein said front face-side lid (122) and the oppositely arranged end portion of said motor are fastened on said heat dissipator (40) by means of flange lids (147a, 147b).

17. The drive mechanism in accordance with any one of claims 5 to 15, wherein said flange lids (47a, 47b; 147a, 147b) are fabricated of flexible material.

18. The drive mechanism according to any one of the preceding claims, wherein said drive motor (20) is a standard asynchronous motor.

## Revendications

1. Entraînement pour une pompe (10), avec un moteur d'entraînement (20) qui est piloté par un changeur de fréquence (30) pour faire varier la vitesse de rotation et pour influencer le couple, dans lequel le changeur de fréquence (30) est fixé sur un corps de refroidissement (40) avec un espace intérieur (43) parcouru par un liquide de refroidissement et incorporé dans le circuit de fluide de la pompe (10), **caractérisé en ce que** le moteur d'entraînement (20) est monté dans l'espace intérieur (43) et la pompe (10) est montée à l'extérieur du corps de refroidissement (40).

2. Entraînement selon la revendication 1, dans lequel le corps de refroidissement (40) est disposé dans la conduite d'aspiration (51, 52) d'un réservoir (50) à la pompe (10).

3. Entraînement selon la revendication 1 ou 2, dans lequel le moteur d'entraînement (20) est balayé par le liquide de refroidissement.

4. Entraînement selon la revendication 3, dans lequel le corps de refroidissement (40) a une enceinte tubulaire, sur la surface latérale de laquelle le changeur de fréquence (30) est fixé et dans laquelle le moteur d'entraînement (20) est disposé en position coaxiale.

5. Entraînement selon la revendication 4, dans lequel le corps de refroidissement (40) est fermé dans les faces d'extrémité par des couvercles à bride (47a, 47b), qui portent une bride A (22) respectivement une bride B (23) du moteur d'entraînement (20), dans lequel l'arbre de sortie (24) du moteur d'entraînement (20) traverse un des couvercles à bride (47a).

6. Entraînement selon la revendication 5, dans lequel des joints d'étanchéité périphériques (44, 45) sont disposés entre les brides (22, 23) et une partie cylindrique (21) du moteur (20), et empêchent l'entrée du liquide de refroidissement dans l'espace intérieur du moteur d'entraînement (20).

7. Entraînement selon la revendication 6, dans lequel le raccord de câble (46) pour le moteur d'entraînement (20) est conduit à travers un des couvercles à bride (47b).

8. Entraînement selon la revendication 7, dans lequel, à travers le couvercle à bride (47b) à travers lequel le raccord de câble (46) est conduit, passe un arbre de ventilateur (25), qui est formé d'une seule pièce avec l'arbre de sortie (24) du moteur d'entraînement (20) et qui est pourvu d'un ventilateur (26).

9. Entraînement selon les revendications 5 à 8, dans lequel les raccords (48, 49) vers le réservoir (50) et vers le raccord d'aspiration (11) de la pompe (10) sont formés dans les deux couvercles à bride (47a, 47b) à l'extérieur de la liaison mécanique entre le couvercle à bride (47a, 47b) et la bride correspondante (22, 23).

10. Entraînement selon la revendication 9, dans lequel les raccords (48, 49) sont disposés avec un décalage par rapport à l'arbre de sortie (24) du moteur d'entraînement (20).

11. Entraînement selon la revendication 1, dans lequel un couvercle d'une face d'extrémité (122) du moteur d'entraînement (20) est également en même temps un couvercle d'extrémité de la pompe (10).

12. Entraînement selon la revendication 11, dans lequel un espace parcouru par le liquide de refroidissement à proximité du moteur d'entraînement (20) est raccordé à un raccord d'aspiration (111) de la pompe (10) par l'intermédiaire d'une conduite de fluide passant par le couvercle d'une face d'extrémité (122).

13. Entraînement selon la revendication 11, dans lequel l'espace parcouru par le liquide de refroidissement à proximité du moteur d'entraînement (20) est l'espace intérieur (43) dans le corps de refroidissement (40).

14. Entraînement selon l'une quelconque des revendications 11 à 13, dans lequel la pompe (10) est une pompe à pistons axiaux et un palier axial (115) des pistons axiaux est maintenu par un dispositif de support (114) prévu sur le couvercle d'une face d'extrémité (122).

15. Entraînement selon la revendication 14, dans lequel il est prévu, radialement à l'extérieur du dispositif de support (114), une enceinte (116) en matériau insonorisant fixée sur le couvercle d'une face d'extrémité (122).

16. Entraînement selon l'une quelconque des revendications 11 à 15, dans lequel le couvercle d'une face d'extrémité (112) et la partie terminale opposée du moteur sont fixés sur le corps de refroidissement (40) par un couvercle à bride (147a, 147b).

17. Entraînement selon l'une quelconque des revendications 5 à 15, dans lequel les couvercles à bride (47a, 47b; 147a, 147b) sont fabriqués en un matériau flexible.

18. Entraînement selon l'une quelconque des revendications précédentes, dans lequel le moteur d'entraînement (20) est un moteur asynchrone standard.
